(19) Europäisches Patentamt
European Patent Office
Office européen des brevets

(11) **EP 2 622 730 B1**

(12) **EUROPEAN PATENT SPECIFICATION**

(45) Date of publication and mention
of the grant of the patent:
**12.12.2018 Bulletin 2018/50**

(51) Int Cl.:
*H02P 6/10* *(2006.01)*        *H02P 21/05* *(2006.01)*
*H02P 23/04* *(2006.01)*        *H02P 25/08* *(2016.01)*
*H02P 25/098* *(2016.01)*

(21) Application number: **10800780.8**

(22) Date of filing: **01.10.2010**

(86) International application number:
**PCT/IB2010/003019**

(87) International publication number:
**WO 2012/042293 (05.04.2012 Gazette 2012/14)**

(54) **METHOD FOR CONTROLLING AN ELECTRICAL MOTOR**

VORRICHTUNG ZUR STEUERUNG EINES ELEKTROMOTORS

PROCÉDÉ DE COMMANDE D'UN MOTEUR ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.08.2013 Bulletin 2013/32**

(73) Proprietor: **Aktiebolaget SKF**
**415 50 Göteborg (SE)**

(72) Inventor: **HUBERT, Mathieu**
**F-37000 Tours (FR)**

(74) Representative: **Kuhstrebe, Jochen et al**
**SKF GmbH**
**Gunnar-Wester-Straße 12**
**97421 Schweinfurt (DE)**

(56) References cited:
**EP-A2- 1 061 640      US-A1- 2004 079 173**
**US-B1- 6 369 535**

**Description**

TECHNICAL FIELD OF THE INVENTION

The invention relates to a method for controlling an electrical motor, especially a synchronous motor, for instance a brushless motor.

BACKGROUND OF THE INVENTION

Control of synchronous motors and especially brushless motors is often realized by six-steps control or by sinusoidal control. These methods use sensors adapted to detect the angular position of the rotor with respect to the stator in order to adjust the currents provided to the armatures defining the phases of the stator. The goal is to obtain a substantially constant output torque.

These methods cannot overcome the flaws of the motor. For example, mechanical flaws on the coils or on the magnets and other issues imply undesired output torque variations, which are called "torque ripple". The torque ripples may be due to an eccentricity of the rotor, an attraction between the teeth on which the coils of the stator are fixed and the magnets of the rotor, or to imperfections on the back electromotive force of the motor. These issues may also provoke noises, vibrations, and other phenomenons that may depreciate the operation of the motor or damage its environment.

EP-A-1 061 640 and US-A-2004/0079173 discloses a method and apparatus for energizing stator windings of a rotating electromagnetic machine. Corrective harmonic currents are provided to the windings so as to obtain a constant output torque, in order to eliminate torque ripple inaccuracies. The corrective harmonic currents are computed on the basis of some characteristics of the electrical motor, such as its back electromotive force. However, this often needs a precise knowledge of the operating principle of the electric motor.

SUMMARY OF THE INVENTION

This invention aims at proposing a new method for controlling an electrical motor allowing to overcome the issues provoked by mechanical flaws, magnetic interactions and electrical imperfections of the motor, in order to have a substantially constant output torque, with a basic knowledge of the operating principle of the motor.

To this end, the invention concerns a method for controlling an electrical motor comprising a magnetic rotor comprising at least a couple of magnetic poles, a stator comprising at least three coils rolled around teeth, said coils being fed in electrical current, the output torque being controlled by acting on the electrical currents provided to the coils, the method comprising a step consisting in providing corrective harmonic currents to the coils to obtain a constant output torque, said corrective harmonic currents being computed- on the basis of the harmonic profile of the back electromotive force of the motor, the method comprising, prior to feeding the coils with the corrective currents, the steps of a) determining the harmonic profile of the back electromotive force of the motor, and b) determining the corrective harmonic currents on the basis of the harmonic profile of the back electromotive force of the motor, in order to obtain a constant output torque. This method is characterized in that the harmonic profile of the back electromotive force is determined by running the motor in generator mode and measuring voltage variations between the terminals of the coils.

Thank to the invention, the control currents provided to the coils, which corresponds to the phases of the motor, are corrected on the basis of data concerning the mechanical structure of the motor, the magnetic interactions, the electrical imperfections and all the possible issues that may provoke torque ripples and reduce the performances and the accuracy of the motor. The harmonic profile of the back electromotive force is used to compute the corrective currents, and determined in a simple way, without precise knowledge of the operating principle of the motor.

According to further aspects of the invention which are advantageous but not compulsory, such a method may incorporate one or several of the following features:

- The corrective harmonic currents are also computed on the basis of a determination of the excentricity of the rotor.
- The corrective harmonic currents are also computed on the basis of the number of magnets of the rotor and the number of teeth of the stator.
- The corrective harmonic currents are also computed on the basis of the variations of the distance between the stator and the rotor, along a radial axis of the motor.
- The motor is controlled by a six-step process, and wherein the corrective harmonic currents are injected during a current control step of the six-steps process.
- The motor is controlled by a sinusoidal control process, and wherein the corrective harmonic currents are injected during the mathematical transformations of the sinusoidal control process.

BRIEF DESCRIPTION OF THE DRAWINGS

The invention will now be explained in correspondence with the annexed figures and as an illustrative example, without restricting the objet of the invention. In the annexed figures:

- figure 1 is a schematic representation of an electrical motor with which the method of the invention can be implemented,
- figures 2 and 3 are block diagrams representing electrical motor control processes with which the method according to the invention can be implemented,
- figure 4 is a schematic representation of a device adapted to determine the harmonic profile of the back electromotive force of the motor of figure1.

DETAILED DESCRIPTIONS OF SOME EMBODIMENTS

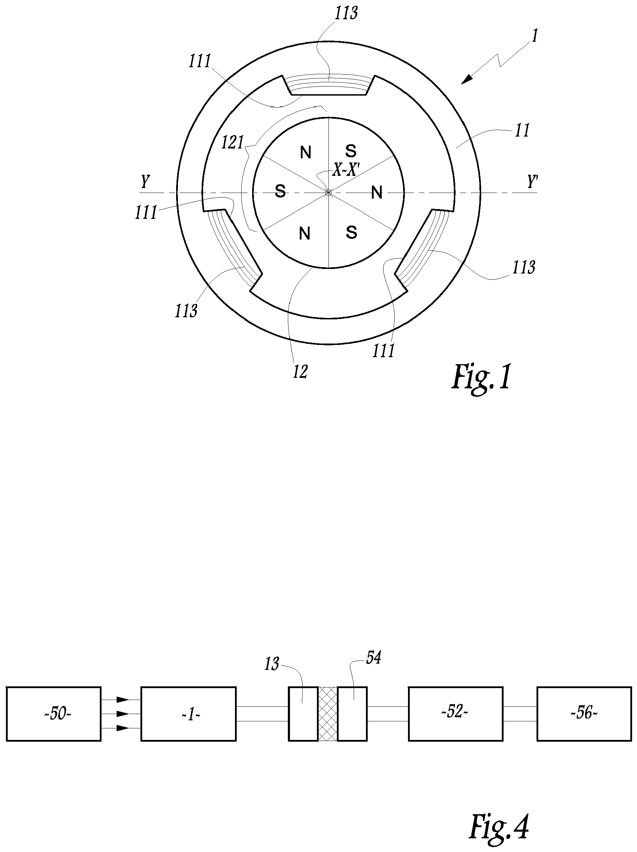

As illustrated on figure 1, an electrical synchronous motor 1, such as a brushless motor, comprises a stator 11 and a rotor 12. The stator 11 comprises several teeth or armatures 111, on which are mounted coils 113. Coils 113 are rolled around teeth 111 and linked with each other and with a non-represented electric power supply known per se. In the present example, stator 11 comprises three coils arranged with respective angles of 120° from each other with respect to a rotation axis X-X' of motor 1. Rotor 12 is adapted to rotate with respect to stator 11 around axis X-X'. To this end, rotor 12 comprises one or several permanent magnets 121 with a north pole N and a south pole S. In the example represented, rotor 12 comprises three magnets 121 extending along an angular sector of 120° with respect to axis X-X'. As it appears on the drawing, each north pole N is opposed to a south pole S with respect to axis X-X'.

Electrical motor 1 is operated by feeding each coil 113 with electrical current. Each coil 113 creates a magnetic field which provokes a rotation of rotor 12 around axis X-X'.

To control the output torque of motor 1, the electrical properties of the current which is provided to coils 113 are controlled. Each coil 113 is provided with a dedicated electrical current of a predefined intensity.

The goal of the control of motor 1 is to obtain a substantially constant output torque T in order to make sure the mechanical energy provided by motor 1 to, for instance, a non-represented gear wheel, is adapted to said wheel. A constant output torque is the ideal case of operation of an electrical motor. In fact, output torque T of motor 1 is not constant and varies, because of structure flaws of motor 1 and magnetic phenomenons that occur between stator 11 and rotor 12. These variations of output torque are called "torque ripples".

Torque ripples can be caused by an eccentricity of rotor 12 provoking periodic variations of output torque T. Other mechanical flaws can also influence variations of output torque T.

Torque ripples can also come from magnetic interactions between teeth 111 of stator 11 and magnets 121 of rotor 12. This phenomenon is called "cogging torque" and its intensity depends on the number of teeth 111 and on the number of magnets 121 on rotor 12.

Torque ripples can also come from a phenomenon called "reluctancy" which is provoked by variations of the distance between stator 11 and rotor 12 along a radial axis Y-Y', perpendicular to axis X-X' during the rotation of rotor 12.

Torque ripples can also be provoked by the fact that the back electromotive force (emf) of motor 1 should have, in an ideal case, a sinusoidal waveform. This is actually not the case: back emf waveforms show some periodic flaws that provoke torque ripple.

In order to obtain a substantially constant output torque T, these issues must be included in the computation of the currents that are provided to the coils. To this end, corrective harmonic currents are injected in the current controls of motor 1, for each of its coils 113, hereafter called "phases". The corrective harmonic currents are computed on the basis of the characteristics of motor 1 that are involved in the aforementioned torque ripples provoking issues. Each issue can be analysed and measured in order to determine an harmonic profile, allowing to determine corrective harmonic currents to be delivered to the current control of motor 1.

The harmonic corrective currents can be injected at different points of the control of the motor, depending on the control process used. From here, the term "angular position" denotes the electric angle of the rotor, unless precised.

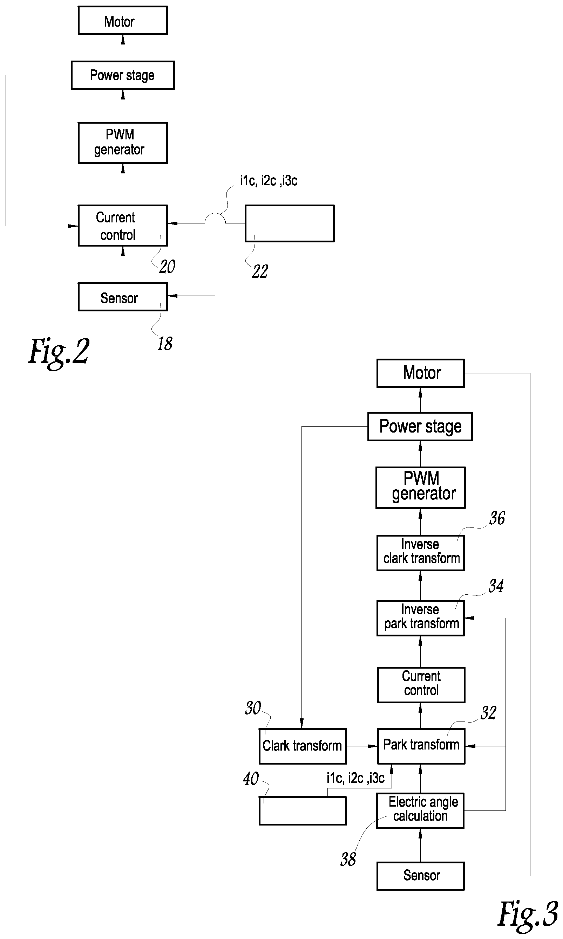

A six-steps control process can be used, which separates rotation of rotor 12 in six angular sectors and uses three position sensors adapted to determine in which angular sector rotor 12 is. This control process is well known by those skilled in the art and is not precisely described here. This control process represented on figure 2 comprises a current control step 20, during which the intensity of the current provided to coils 113 is determined on the basis of the angular position of rotor 12 and on the basis of the actual intensities of the currents delivered to the motor. In a step 22, the corrective harmonic currents can be incorporated in the current control step 20. They can be substituted to the normal control currents or be added to these currents.

A sinusoidal control process can also be used to control motor 1. This system is known from those skilled in the art. The sinusoidal control delivers constant values to the phases of motor 1, these constant values being amplitudes of the sinusoidal currents that are delivered to the phases depending on the angular position of rotor 12 detected by a non-shown sensor. This control process represented on figure 3 involves mathematical transformations adapted to transform sinusoidal functions into discrete values, and to transform discrete values into sinusoidal functions. These transformations involve Park and Clark transforms, like represented on steps 30, 32, 34 and 36 on figure 3. The corrective harmonic currents are injected directly in one of these calculation steps. In the example shown, the corrective harmonic currents are injected, during a step 40, in a first Park transform 32.

In the following example, a method for determining corrective harmonic currents will be explained, implementing the computation of the corrective harmonic currents on the basis of the correction of a non-sinusoidal back emf. In order to determine the corrective harmonic currents, one determines the harmonic profile of the back emf of each of the phases of motor 1. In this example, the back emf of the phases are determined by an experimental device later decribed and three components, noted e1r, e2r and e3r are determined. Values 1 to 3 denote each phase of motor 1 and letter r, which stands for "real", denotes the experimental provenance of the data.

Each of these three back emf are sinusoidal harmonic sums which can be written as follows:

$$eir(\theta) = \sum_{a=0}^{k} Eia \sin(a\theta) \qquad (1)$$

where i e [1; 3], where k is the number of harmonics computed and where $\theta$ is the angular position.

The output torque T of motor 1 can be written as follows:

$$T = i1 . e1 + i2 . e2 + i3 . e3 \qquad (2)$$

This equation is the general expression of the value of output torque T of motor 1, where i1 to i3 are the currents normally delivered to phases 1 to 3 in a classical control method.

The same process is realized for each phase. In the following, the determination of the back emf is explained for phase 1.

The output torque values obtained with an ideal back emf e1 under a normal control current i can be easily determined in a manner known form the one skilled in the art. This output torque T, which should be constant under a predefined control setting, must be obtained with a real back emf, that-is-to-say non ideal, which can be non sinusoidal, under a corrected control current i1c, the letter c denoting the corrected nature of this current. The goal is then to determine i1c. To this end, one must determine e1r by an experimental method.

To compute i1c, the following relation is used:

$$i1c . e1r = i1 . e1 \qquad (3)$$

Finally, the relation to determine i1c can be written as follows:

$$i1c = \frac{i1 . e1}{e1r} \qquad (4)$$

These litteral equations are given in simplified form. Theoretically, each component of these relations can be developed into sums of sinusoidal harmonics. Once the computations are realized, i1c can be written as follows:

$$i1c = \alpha \sin (\theta) + \beta \sin (2\theta) + \delta \sin(3\theta) + ... \qquad (5)$$

where $\theta$ is the electric angular position of each magnet of rotor 12.

The number k of harmonics computed depends on the accuracy required to control motor 1. For instance, twenty harmonics can be computed.

The aforementioned computations are realized for each phase 1, 2 and 3 of motor 1 and injected at the steps predetermined in the control process chosen.

To determine the real back emf harmonic profiles, electrical motor 1 can be operated in a generator mode. By measuring the voltage between the terminals of each of the phases of motor 1, the real back emf can be determined for each phase. This measurement is realized during one mechanical turn of motor 1. By a fast Fourier transform, the harmonic profile of each of the back emf of the phases can be determined and injected into equation (4) with which correction currents i1c to i3c are determined.

According to an alternate embodiment represented on figure 4, motor 1 can be operated in motor mode under a normal control process 50. In this method, output torque T of motor 1 is detected thanks to a torque sensor 52 which is coupled to an output shaft 13 of motor 1 by a mechanical clutch 54. This operation is realized under a predefined load 56.

The variations of output torque T are measured on one mechanical turn of output shaft 13. This permits, knowing the control currents that have been delivered to motor 1, to determine the harmonic profile of the back emf of motor 1 thanks to an equation similar to equation (2).

This correction method permits to obtain a substantially constant output torque without changing the structure of motor 1, the computation involves use of only a supplementary microprocessor or a microchip in a control unit of the motor. To realize this control, experimental measurements or theoretical calculations have to be realized in order to determine the corrective harmonic currents.

It is possible to operate several harmonic corrective processes at the same time, computed on the basis of different torque ripple origins.

## Claims

1. Method for controlling an electrical motor (1), comprising :

   - a magnetic rotor (12) comprising at least a couple of magnetic poles (N, S),
   - a stator (11) comprising at least three coils (113) rolled around teeth (111), said coils (113) being fed by electrical current,

   the output torque (T) of the motor (1) being controlled by acting on the electrical current provided to the coils (113), the method comprising a step consisting in providing corrective harmonic currents (i1c, i2c, i3c) to the coils (113) to obtain a constant output torque (T), said corrective harmonic currents being computed on the basis of the harmonic profile of the back electromotive force (e1r, e2r, e3r) of the motor (1), the method comprising, prior to feeding the coils (113) with the corrective currents, the steps of:

   a) determining the harmonic profile (e1r, e2r, e3r) of the back electromotive force of the motor (1);
   b) determining the corrective harmonic currents on the basis of the harmonic profile of the back electromotive force of the motor (1), in order to obtain a constant output torque (T),

   **characterised in that** the harmonic profile (e1r, e2r, e3r) of the back electromotive force is determined by running the motor (1) in generator mode and measuring voltage variations between the terminals of the coils (113).

2. Method according to claim 1, wherein the corrective harmonic currents (i1c, i2c, i3c) are also computed on the basis of a determination of the excentricity of the rotor (12).

3. Method according to one of the previous claims, wherein the corrective harmonic currents (i1c, i2c, i3c) are also computed on the basis of the number of magnets (121) of the rotor (12) and the number of teeth (111) of the stator (11).

4. Method according to one of the previous claims, wherein the corrective harmonic currents (i1c, i2c, i3c) are also computed on the basis of the variations of the distance between the stator (11) and the rotor (12), along a radial axis (Y-Y') of the motor (1).

5. Method according to one of the previous claims, wherein the motor (1) is controlled by a six-step process, and wherein the corrective harmonic currents (i1c, i2c, i3c) are injected during a current control step (20) of the six-step process.

6. Method according to one of claims 1 to 4, wherein the motor (1) is controlled by a sinusoidal control process, and wherein the corrective harmonic currents (i1c, i2c, i3c) are injected during the mathematical transformations of the sinusoidal control process.

**Patentansprüche**

1. Verfahren zur Steuerung eines Elektromotors (1), umfassend

   - einen magnetischen Rotor (12) mit mindestens einem Paar magnetischer Pole (N, S),
   - einen Stator (11) mit mindestens drei um Zähne (111) gewickelten Spulen (113), wobei die Spulen mit elektrischem Strom gespeist werden,

   wobei das Ausgangsdrehmoment (T) des Motors (1) durch Einwirkung auf den an den Spulen (113) anliegenden elektrischen Strom gesteuert wird und wobei das Verfahren einen Schritt umfasst, der darin besteht, dass in die Spulen (113) Oberwellen-Korrekturströme (i1c, i2c, i3c) eingespeist werden, um ein konstantes Ausgangsdrehmoment (T) zu erzielen, wobei besagte Oberwellen-Korrekturströme auf der Grundlage des Oberwellenprofils der entgegengerichteten elektromotorischen Kraft (e1r, e2r, e3r) des Motors (1) berechnet werden, und wobei das Verfahren vor der Einspeisung der Korrekturströme in die Spulen (113) noch folgende Schritte umfasst:

   a) Ermittlung des Oberwellenprofils (e1r, e2r, e3r) der entgegengerichteten elektromotorischen Kraft des Motors (1),
   b) Ermittlung der Oberwellen-Korrekturströme auf der Grundlage des Oberwellenprofils der entgegengerichteten elektromotorischen Kraft des Motors (1), um ein konstantes Ausgangsdrehmoment (T) zu erzielen,

   **dadurch gekennzeichnet, dass**
   das Oberwellenprofil (e1r, e2r, e3r) der entgegengerichteten elektromotorischen Kraft dadurch bestimmt wird, dass der Motor (1) im Generatorbetrieb läuft und die zwischen den Anschlüssen der Spulen (113) auftretenden Spannungsänderungen gemessen werden.

2. Verfahren nach Anspruch 1, wobei die Oberwellen-Korrekturströme (i1c, i2c, i3c) auch auf der Grundlage einer Ermittlung der Exzentrizität des Rotors (12) berechnet werden.

3. Verfahren nach einem der vorgenannten Ansprüche, wobei die Oberwellen-Korrekturströme (i1c, i2c, i3c) auch auf der Grundlage der Anzahl der Magnete (121) des Rotors (12) und der Anzahl der Zähne (111) des Stators (11) berechnet werden.

4. Verfahren nach einem der vorgenannten Ansprüche, wobei die Oberwellen-Korrekturströme (i1c, i2c, i3c) auch auf der Grundlage der Abstandsänderungen zwischen dem Stator (11) und dem Rotor (12) entlang einer Radialachse (Y-Y') des Motors (1) berechnet werden.

5. Verfahren nach einem der vorgenannten Ansprüche, wobei der Motor (1) durch einen sechs Schritte umfassenden Vorgang gesteuert wird und wobei die Oberwellen-Korrekturströme (i1c, i2c, i3c) während eines Stromsteuerschrittes (20) des sechs Schritte umfassenden Vorgangs zugeführt werden.

6. Verfahren nach einem der Ansprüche 1 bis 4, wobei der Motor (1) durch einen sinusförmigen Steuervorgang gesteuert wird und wobei die Oberwellen-Korrekturströme (i1c, i2c, i3c) während der mathematischen Transformationen des sinusförmigen Steuervorgangs zugeführt werden.

**Revendications**

1. Procédé de commande d'un moteur électrique (1), comprenant :

   - un rotor magnétique (12) comprenant au moins un couple de pôles magnétiques (N, S),
   - un stator (11) comprenant au moins trois bobines (113) enroulées autour de dents (111), lesdites bobines (113) étant alimentées par un courant électrique,

   le couple de sortie (T) du moteur (1) étant commandé en agissant sur le courant électrique délivré aux bobines (113), le procédé comprenant une étape consistant à délivrer des courants harmoniques correcteurs (i1c, i2c, i3c) aux bobines (113) pour obtenir un couple de sortie constant (T), lesdits courants harmoniques correcteurs étant calculés sur la base du profil harmonique de la force contre-électromotrice (e1r, e2r, e3r) du moteur (1), le procédé comprenant, avant d'alimenter les bobines (113) avec les courants correcteurs, les étapes consistant à :

a) déterminer le profil harmonique (e1r, e2r, e3r) de la force contre-électromotrice du moteur (1) ;
b) déterminer les courants harmoniques correcteurs sur la base du profil harmonique de la force contre-électromotrice du moteur (1), afin d'obtenir un couple de sortie constant (T),

**caractérisé en ce que**
le profil harmonique (e1r, e2r, e3r) de la force contre-électromotrice est déterminé en faisant tourner le moteur (1) en mode générateur et en mesurant des variations de tension entre les bornes des bobines (113).

**2.** Procédé selon la revendication 1, dans lequel les courants harmoniques correcteurs (i1c, i2c, i3c) sont également calculés sur la base d'une détermination de l'excentricité du rotor (12).

**3.** Procédé selon une des revendications précédentes, dans lequel les courants harmoniques correcteurs (i1c, i2c, i3c) sont également calculés sur la base du nombre d'aimants (121) du rotor (12) et du nombre de dents (111) du stator (11).

**4.** Procédé selon une des revendications précédentes, dans lequel les courants harmoniques correcteurs (i1c, i2c, i3c) sont également calculés sur la base des variations de la distance entre le stator (11) et le rotor (12), le long d'un axe radial (Y-Y') du moteur (1).

**5.** Procédé selon une des revendications précédentes, dans lequel le moteur (1) est commandé par un procédé en six étapes, et dans lequel les courants harmoniques correcteurs (i1c, i2c, i3c) sont injectés pendant une étape de commande de courant (20) du procédé en six étapes.

**6.** Procédé selon une des revendications 1 à 4, dans lequel le moteur (1) est commandé par un procédé de commande sinusoïdale, et dans lequel les courants harmoniques correcteurs (i1c, i2c, i3c) sont injectés pendant les transformations mathématiques du procédé de commande sinusoïdale.

*Fig.1*

*Fig.4*

Fig.2

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1061640 A

- US 20040079173 A